# EUROPEAN PATENT SPECIFICATION

(11) **EP 4 419 613 B1**
(45) Date of publication and mention of the grant of the patent: **07.10.2026**
(21) Application number: 22806071.1
(22) Date of filing: 20.10.2022
(51) Int. Cl.: C09K 5/04

(54) **COMPOSITIONS COMPRISING 2,3,3,3-TETRAFLUOROPROPENE**
ZUSAMMENSETZUNGEN MIT 2,3,3,3-TETRAFLUORPROPEN
COMPOSITIONS COMPRENANT DU 2,3,3,3-TÉTRAFLUOROPROPÈNE

(30) Priority: 21.10.2021 US 202163270477 P
(43) Date of publication of application: 28.08.2024
(73) Proprietor: The Chemours Company FC, LLC, Wilmington, Delaware 19801 (US)
(72) Inventor: PENG, Sheng, Hockessin, Delaware 19707 (US); SUN-BLANKS, Jian, Arab, Alabama 35016 (US); MINOR, Barbara Haviland, The Villages, Florida 32163 (US)
(74) Representative: Abitz & Partner
(86) International application number: PCT/US2022/047208
(87) International publication number: WO 2023/069574

(56) References cited:
- WO-A1-2022/192205
- US-A1- 2018 231 281
- US-A1- 2020 190 381
- US-A1- 2021 040 368
- US-A1- 2021 108 119

## Description

### BACKGROUND OF THE INVENTION

### 1. Field of the Invention.

The present invention relates broadly to compositions comprising 2,3,3,3-tetrafluoropropene (1234yf).

### 2. Description of Related Art.

New environmental regulations on refrigerants have forced the refrigeration and air-conditioning industry to look for new refrigerants with low global warming potential (GWP).

Replacement refrigerants are being sought that have low GWP, low toxicity, low or no flammability, reasonable cost and excellent refrigeration performance. Fluoroolefins provide satisfy these criteria. In addition, desired properties in a refrigerant include ease of detecting leaks, performance including efficiency and capacity refrigerant applications, solubility in lubricants used in such applications and compatibility with components used in such applications.

2,3,3,3-Tetrafluoropropene (HFO-1234yf, R-1234yf or 1234yf) is an example of a fluoroolefin having a low Global Warming Potential (GWP) and is an alternative to high GWP hydrofluorocarbons and/or ozone-depleting hydrochlorofluorocarbons in numerous applications such as refrigeration, air-conditioning, heating and cooling, power cycles. Improvement in properties of compositions comprising 1234yf is desired.

US 2018/231281 A1 discloses compositions comprising HFO-1234yf and octafluorohexenes. US 2021/040368 A1 and US 2021/108119 A1 describe compositions comprising HFO-1234yf and air. US 2020/190381 A1 describes compositions comprising HFO-1234yf and an inhibitor.

### SUMMARY OF THE INVENTION

The present invention provides a composition comprising HFO-1234yf (also referred to herein as HFO-1234yf, 1234yf, and having the formula CF₃CFCH=CH₂), at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, and at least one gas component, wherein the gas component is selected from the group consisting of O₂, N₂, Ar, CO₂, CH₄, He, and N₂/O₂ mixtures having a ratio of N₂/O₂ of greater than or equal to 78/21.

The present invention can improve the compatibility of 1234yf-containing compositions with refrigerant lubricants commonly used in compressors. Such lubricants include synthetic hydrocarbon oils such as polyol ester (POE), polyalkylene glycol (PAG), and polyvinyl ether (PVE).

The present invention further provides a method for heating or cooling using a composition comprising HFO-1234yf, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, and a gas component, wherein the gas component is selected from the group consisting of O₂, N₂, Ar, CO₂, CH₄, He, and N₂/O₂ mixtures having a ratio of N₂/O₂ of greater than or equal to 78/21.

The present invention further provides a container with a composition comprising HFO-1234yf, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, and a gas component, wherein the gas component is selected from the group consisting of O₂, N₂, Ar, CO₂, CH₄, He, and N₂/O₂ mixtures having a ratio of N₂/O₂ of greater than or equal to 78/21.

The present invention further provides a composition as described in any one of claims 2 to 8, the use as described in any one of claims 11 to 13, and a method as described in any one of claims 14 and 15.

In certain embodiments, the composition is substantially free of any phenol and benzophenone derivatives.

The composition may comprise an oligomer having a linking unit chosen from least one of the following: -CF(CF₃)CH₂-CH₂CF(CF₃)-, or -CF(CF₃)CH₂-CF(CF₃)CH₂-, or -CH₂CF(CF₃)-CF(CF₃)CH₂-, or-CF(CF₃)CH₂-O-O-CH₂CF(CF₃)-, or -CF(CF₃)CH₂-O-O-CF(CF₃)CH₂-, or-CH₂CF(CF₃)-O-O-CF(CF₃)CH₂-, or -CF(CF₃)CH₂-O-CH₂CF(CF₃)- , or-CF(CF₃)CH₂-O-CF(CF₃)CH₂-, or -CH₂CF(CF₃)-O-CF(CF₃)CH₂-.

The composition may comprise an oligomer having a linking unit chosen from least one of the following -CF(CF₃)CH₂-CF(CF₃)CH₂- ,-CF(CF₃)CH₂-O-O-CH₂CF(CF₃)- , and -CF(CF₃)CH₂-O-O-CF(CF₃)CH₂- .

The oligomer may contain at least one functional end groups such as -CH₂C(=O)CF₃ or -CH₂OH.

Another embodiment of the invention relates to any of the foregoing compositions wherein the composition further comprises HFO-1234ze.

Another embodiment of the invention relates to any of the foregoing compositions and further comprising at least one member selected from the group consisting of HFO-1243zf, HCO-1140, HFO-1234ze, 3,3,3-trifluoropropyne, HCFC-225ca, HCFC-225cb, HFC-227ea, and HFC-152a.

Another embodiment of the invention relates to any of the foregoing compositions and further comprising at least one member selected from the group consisting of HFO-1234ze, HFO-1243zf, Z-HFO-1336mzz, E-HFO-1336mzz, HFO-1327mz, HCFO-1122, HCFO-1122a, HFO-1123, HCFO-1233zd, HCFO-1224yd, E-HFO-1132, Z-HFO-1132, HFO-1132a, CFO-1112, E-HFO-1225ye, Z-HFO-1225ye, HFO-1234zc, HFO-1234ye, HFO-1234yc, HFO-1225zc, and HFC-152a.

Another embodiment of the invention relates to any of the foregoing compositions and further comprising a lubricant.

Another embodiment of the invention relates to any of the foregoing compositions and further comprising water.

Another embodiment of the invention relates to any of the foregoing compositions wherein the inhibitor is present in an amount of about 30 to about 3,000 ppm.

Another embodiment of the invention relates to any of the foregoing compositions wherein the composition is substantially free of at least one of ammonia and CF₃I.

Another embodiment of the invention relates to use of any of the foregoing compositions for heating or cooling. Included is use of any of the foregoing compositions as a heat transfer fluid. Also included is use of any of the foregoing compositions as a refrigerant.

Another embodiment of the invention relates to a container with a refrigerant comprising any of the foregoing compositions.

The embodiments of the invention can be used alone or in combinations with each other, and different embodiments can be combined and form part of the invention.

### DETAILED DESCRIPTION OF THE INVENTION

The present invention provides a composition 2,3,3,3-tetrafluoropropene, 1234yf, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, and at least one gas component, wherein the gas component is selected from the group consisting of O₂, N₂, Ar, CO₂, CH₄, He, and N₂/O₂ mixtures having a ratio of N₂/O₂ of greater than or equal to 78/21.

In certain embodiments the composition comprises an oligomer as defined hereinbelow.

The present disclosure provides an inventive composition which may comprises one or more oligomers having a repeating unit of -{[CF(CF₃)CH₂]ₓ(Oₙ)}_{y}[CF(CF₃)CH₂]_{z}-, where x, y ≥ 1, n = 0, 1 or 2, and z ≥ 0.

The group -{[CF(CF₃)CH₂]ₓ(Oₙ)}_{y}[CF(CF₃)CH₂]_{z}-, may have a formula chosen from one or more of: -CF(CF₃)CH₂-CH₂CF(CF₃)-, or-CF(CF₃)CH₂-CF(CF₃)CH₂-, or -CH₂CF(CF₃)-CF(CF₃)CH₂-, or-CF(CF₃)CH₂-O-O-CH₂CF(CF₃)-, or -CF(CF₃)CH₂-O-O-CF(CF₃)CH₂-, or-CH₂CF(CF₃)-O-O-CF(CF₃)CH₂-, or -CF(CF₃)CH₂-O-CH₂CF(CF₃)- , or-CF(CF₃)CH₂-O-CF(CF₃)CH₂-, or -CH₂CF(CF₃)-O-CF(CF₃)CH₂-.

In one embodiment, the group - {[CF(CF₃)CH₂]ₓ(Oₙ)}_{y}[CF(CF₃)CH₂]_{z}-, has the formula chosen from:-CF(CF₃)CH₂-CH₂CF(CF₃)-, -CF(CF₃)CH₂-O-O-CH₂CF(CF₃)-, and-CF(CF₃)CH₂-O-CH₂CF(CF₃)-.

In one embodiment, the group - {[CF(CF₃)CH₂]ₓ(Oₙ)}_{y}[CF(CF₃)CH₂]_{z}-, has the formula chosen from:-CF(CF₃)CH₂-CF(CF₃)CH₂-, -CF(CF₃)CH₂-O-O-CF(CF₃)CH₂-, and-CF(CF₃)CH₂-O-CF(CF₃)CH₂-.

In one embodiment, the group - {[CF(CF₃)CH₂]ₓ(Oₙ)}_{y}[CF(CF₃)CH₂]_{z}- has the formula chosen from:-CH₂CF(CF₃)-CF(CF₃)CH₂-, -CH₂CF(CF₃)-O-O-CF(CF₃)CH₂-, and-CH₂CF(CF₃)-O-CF(CF₃)CH₂-.

The oligomer may contain a functional end group such as a fluoroketone or alcohol group. In one embodiment, the oligomer comprises at least one end group that is -CH₂C(=O)CF₃. In one embodiment, the oligomer comprises at least one end group that is - CH₂OH.

Surprisingly, even when a peroxygen unit is present, the composition is stable, meaning the composition is stable under refrigerant use conditions. Such conditions are known to those skilled in the art. See, for example, ASHRAE Fundamentals Handbook, SI Edition, 2017, Chapter 29, Table 8. See also Chapter 8 of the ASHRAE Handbook discussing refrigerants and providing examples of refrigerant operating conditions, which provides the following.
Low temperature refrigeration: Evaporator -31.7°C, Condenser 30°C
Medium temperature refrigeration: Evaporator -6.7°C, Condenser 30°C
Air conditioning: Evaporator 7.2°C, Condenser 30°C

The oligomer is soluble in liquid 1234yf (at ambient pressure and temperature) in an amount of at least 3 wt%. In some embodiments the oligomer is soluble in liquid 1234yf in an amount of at least 3.5 wt% or at least 5 wt %. Oligomer and polymer can be determined by ¹⁹F NMR and/or IR/ and/or head space GC-MS analysis.

The oligomer may be present in the composition in an amount of at least 0.001 % by weight (10 ppm). The oligomer may be present in the composition in an amount of at least 0.003 % by weight (30 ppm). The oligomer may be present in the composition in an amount of at least 0.01 % by weight (100 ppm). The oligomer may be present in the composition in an amount of at least 0.05 % by weight (500 ppm). The oligomer may be present in the composition in an amount of at least 0.5 % by weight (5000 ppm).

The oligomer may be present in the composition in an amount up to 1 % by weight. The oligomer may be present in the composition in an amount up to 0.5 % by weight. The oligomer may be present in the composition in an amount up to 0.1 % by weight.

In specific embodments, the amount of oligomer in the composition may range from 0.001 % to 1 % by weight, or the amount of oligomer in the composition may range from 0.001 % to 0.5 % by weight, or the amount of oligomer in the composition may range from 0.001 % to 0.1 % by weight, or the amount of oligomer in the composition may range from 0.01 % to 0.5 % by weight, or the amount of oligomer in the composition may range from 0.01 % to 0.1 % by weight. A wide range of oligomer concentration is possible based on varying m and n in the formula, which impact the length of the oligomer and hence the size of the oligomer.

A composition comprising 1234yf and an oligomer may be prepared by contacting 1234yf with a source of oxygen at a contact time and contact temperature. Optionally one or more of the additional compounds may be present during the contacting step. Examples of what may be used as an oxygen source to prepare the composition disclosed herein include oxygen-containing gases such as oxygen (100%) and air. Alternatively, the oxygen source may be in combination with peroxygen compound such as fluoroolefin polyperoxide, peroxides, hydroperoxides, persulfates, percarbonates, perborates and hydropersulfates. An example of a hydroperoxide is cumene hydroperoxide. A readily available oxygen source is air.

In the preparation of the composition, the oxygen source has an oxygen (O₂) concentration of at least 0.01 % oxygen or at least 21 % oxygen or pure (100%) oxygen, by weight. The contact time is at least 3 days or at least 14 days. The contact temperature is in the range of -25 to 150°C. It will be appreciated by those skilled in the art that the oxygen concentration, contact time and contact temperature are interdependent. That is, the composition as one of the oxygen concentration, contact time and temperature increases, the others will decrease.

Air is the preferred oxygen source for its availability and cost. The oxygen source may be remain present in the composition after the composition has been prepared in an amount from greater than zero wt% up to 10,000 ppm.

Additional compounds may be added prior to or following the above-recited contacting step.

### Inhibitor

The composition may further comprise an inhibitor selected from the group consisting of d-limonene, I-limonene, α-pinene, β-pinene, α-terpinene, β-terpinene, γ-terpinene, and δ-terpinene, and mixtures of two or more thereof. In one embodiment, the inhibitor comprises d-limonene or α-terpinene.

In one embodiment, the composition comprises d-limonene or α-terpinene optionally with an anti-oxidant having a unique fragrance even at a few ppm level. This pleasant odor can be utilized for leakage detection of the composition, for example, in heat transfer applications. This is especially beneficial for early refrigerant leakage detection in household air conditioner or mobile air conditioner as paraprofessional electronic leak detectors often are not available in either location.

While any suitable amount of inhibitor may be employed, effective amounts comprise from 0.001 wt% to 10 wt%, 0.01 wt% to 5 wt%, 0.3 wt% to 4 wt%, 0.3 wt% to 1 wt% based on the total weight of the composition. In one embodiment, an effective amount comprises 10 to 2000 ppm or 10 to 1000 ppm or 10 to 500 ppm of at least one inhibitor.

In another embodiment of the invention relates to any of the foregoing compositions wherein the inhibitor is present in an amount of about 30 to about 3,000 ppm (by weight).

Another embodiment of the invention relates to any of the foregoing compositions wherein the inhibitor comprises at least one of d-limonene or α-terpinene.

Another embodiment of the invention relates to any of the foregoing compositions wherein the inhibitor comprises a liquid at a temperature of about -80 to 180°C.

In certain embodiments, the present invention provides a composition comprising one or more additional refrigerants, selected from the group consisting of HFC-32, HFC-125, HFC-134a, HFC-152a, E-HFO1132, and CO₂, and mixtures of two or more thereof.

One embodiment of the invention relates to a composition comprising 1234yf, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, HFC-32, and a gas component wherein the gas component is selected from the group consisting of O₂, N₂, Ar, CO₂, CH₄, He, and N₂/O₂ mixtures having a ratio of N₂/O₂ of greater than or equal to 78/21.

One embodiment of the invention relates to a composition comprising 1234yf, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, HFC-32, HFC-125, a gas component wherein the gas component is selected from the group consisting of O₂, N₂, Ar, CO₂, CH₄, He, and N₂/O₂ mixtures having a ratio of N₂/O₂ of greater than or equal to 78/21.

One embodiment of the invention relates to a composition comprising 1234yf, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, HFC-32, HFC-125, HFC-134a, a gas component, wherein the gas component is selected from the group consisting of O₂, N₂, Ar, CO₂, CH₄, He, and N₂/O₂ mixtures having a ratio of N₂/O₂ of greater than or equal to 78/21.

One embodiment of the invention relates to a composition comprising 1234yf, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, HFC-32, HFC-125, HFC-134a, CO₂, a gas component, wherein the gas component is selected from the group consisting of O₂, N₂, Ar, CO₂, CH₄, He, and N₂/O₂ mixtures having a ratio of N₂/O₂ of greater than or equal to 78/21.

One embodiment of the invention relates to a composition comprising 1234yf, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, HFC-32, HFC-152a, a gas component, wherein the gas component is selected from the group consisting of O₂, N₂, Ar, CO₂, CH₄, He, and N₂/O₂ mixtures having a ratio of N₂/O₂ of greater than or equal to 78/21.

One embodiment of the invention relates to a composition comprising 1234yf, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, HFC-134a, HFC-152a, a gas component, wherein the gas component is selected from the group consisting of O₂, N₂, Ar, CO₂, CH₄, He, and N₂/O₂ mixtures having a ratio of N₂/O₂ of greater than or equal to 78/21.

One embodiment of the invention relates to a composition comprising 1234yf, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, E-HFO-1132, a gas component, wherein the gas component is selected from the group consisting of O₂, N₂, Ar, CO₂, CH₄, He, and N₂/O₂ mixtures having a ratio of N₂/O₂ of greater than or equal to 78/21.

One embodiment of the invention relates to a composition comprising 1234yf, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, HFC-32, E-HFO-1132, a gas component, wherein the gas component is selected from the group consisting of O₂, N₂, Ar, CO₂, CH₄, He, and N₂/O₂ mixtures having a ratio of N₂/O₂ of greater than or equal to 78/21.

One embodiment of the invention relates to a composition comprising 1234yf and at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, and at least one gas component, wherein the gas component is selected from the group consisting of O₂, N₂, Ar, CO₂, CH₄, He, and N₂/O₂ mixtures having a ratio of N₂/O₂ of greater than or equal to 78/21, wherein the composition further comprises an oligomer having a linking unit chosen from least one of the following: -CF(CF₃)CH₂-CH₂CF(CF₃)-, or -CF(CF₃)CH₂-CF(CF₃)CH₂-, or-CH₂CF(CF₃)-CF(CF₃)CH₂-, or -CF(CF₃)CH₂-O-O-CH₂CF(CF₃)-, or-CF(CF₃)CH₂-O-O-CF(CF₃)CH₂-, or -CH₂CF(CF₃)-O-O-CF(CF₃)CH₂-, or-CF(CF₃)CH₂-O-CH₂CF(CF₃)- , or -CF(CF₃)CH₂-O-CF(CF₃)CH₂-, or-CH₂CF(CF₃)-O-CF(CF₃)CH₂-.

Another embodiment of the invention relates to any of the foregoing compositions and further comprising at least one member selected from the group consisting of air, oxygen, cumene hydroperoxide, and fluoroolefin polyperoxides, peroxides, hydroperoxides, persulfates, percarbonates, perborates and hydropersulfates.

Another embodiment of the invention relates to any of the foregoing further comprising at least one lubricant. In some embodiment, the lubricant is selected from the group consisting of polyol ester (POE), polyalkylene glycol (PAG), and polyvinyl ether (PVE).

As used herein, the terms "comprises," "comprising," "includes," "including," "has," "having" or any other variation thereof, are intended to cover a non-exclusive inclusion. For example, a composition, process, method, article, or apparatus that comprises a list of elements is not necessarily limited to only those elements but may include other elements not expressly listed or inherent to such composition, process, method, article, or apparatus.

The transitional phrase "consisting of" excludes any element, step, or ingredient not specified. If in the claim such would close the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole.

The transitional phrase "consisting essentially of" is used to define a composition, method that includes materials, steps, features, components, or elements, in addition to those literally disclosed provided that these additional included materials, steps, features, components, or elements do not materially affect the basic and novel characteristic(s) of the claimed invention, especially the mode of action to achieve the desired result of any of the processes of the present invention. The term 'consisting essentially of' occupies a middle ground between "comprising" and 'consisting of'.

Where applicants have defined an invention or a portion thereof with an open-ended term such as "comprising," it should be readily understood that (unless otherwise stated) the description should be interpreted to also include such an invention using the terms "consisting essentially of" or "consisting of."

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

In certain embodiments, the composition further comprises at least one member selected from the group consisting of HFO-1243zf, HCO-1140, HFO-1234ze, trifluoropropyne, HCFC-225ca, HCFC-225cb, HFC-227ea, and HFC-152a (see Table 1).

In certain embodiments, the composition further comprises at least one member selected from the group consisting of HFO-1234ze, HFO-1243zf, Z-HFO-1336mzz, E-HFO-1336mzz, HFO-1327mz, HCFO-1122, HCFO-1122a, HFO-1123, HCFO-1233zd, HCFO-1224yd, E-HFO-1132, Z-HFO-1132, HFO-1132a, CFO-1112, E-HFO-1225ye, Z-HFO-1225ye, HFO-1234zc, HFO-1234ye, HFO-1234yc, HFO-1225zc, and HFC-152a (see Table 1).

**TABLE 1**

| **Name** | **Structure** | **Chemical name** |
|---|---|---|
| HFO-1243zf | CF₃CH=CH₂ | 3, 3, 3-trifluoro-1-propene |
| HFO-1234ze | E- and/or Z-CF₃CH=CHF | E- or Z-1,3,3,3-tetrafluoropropene |
| HFO-1234zc | CHF₂CH=CF₂ | 1,1,3,3-tetrafluoro-1-propene |
| HFO-1234ye | CHF₂CF=CHF | 1,2,3,3-tetrafluoro-1-propene |
| HFO-1234yc | CH₂FCF=CF₂ | 1,1,2,3-tetrafluoro-1-propene |
| HFO-1225zc | CF₃CH=CF₂ | 1,1,3,3,3-pentafluoropropene |
| Z-HFO-1225ye | Z-CF₃CF=CHF | Z-1,2,3,3,3-pentafluoropropene |
| E-HFO-1225ye | E-CF₃CF=CHF | E-1,2,3,3,3-pentafluoropropene |
| HCFO-1233zd | E- and/or Z-CF₃CH=CHCl | 1-chloro-3,3,3-trifluoropropene |
| HCFO-1224yd | E- and/or Z-CF₃CF=CHCl | 1-chloro-2,3,3,3-tetrafluoropropene |
| trifluoropropyne | CH≡CCF₃ | 3, 3, 3-trifluoropropyne |
| Z-HFO-1336mzz | Z(cis)-CF₃CH=CHCF₃ | Z(cis)-1,1,1,4,4,4-hexafluoro-2-butene |
| E-HFO-1336mzz | E(trans)-CF₃CH=CHCF₃ | E(trans)-1,1,1,4,4,4-hexafluoro-2-butene |
| HFO-1327mz | | |
| HCFC-225ca | CF₃CF₂CHCl₂ | 3,3-dichloro-1,1,1,2,2-pentafluoropropane |
| HCFC-225cb | CF₂ClCF₂CHFCl | 1,3-dichloro-1,1,2,2,3-pentafluoropropane |
| HFC-227ea | CF₃CF₂CHF₂ | 1,1,1,2,2,3,3,3-heptafluoropropane |
| HFC-152a | CHF=CFCF₂CF₃ | 1,2,3,3,4,4,4-heptafluoro-1-butene |
| CFO-1112 | CClF=CClF | 1,2-dichloro-1,2-difluoroethylene |
| HCO-1122 | CF₂=CHCl | 2-chloro-1,1-difluoroethylene |
| HCO-1122a | | |
| HFO-1123 | CF₂=CHF | 1,1,2-trifluoroethylene |
| E-HFO-1132 | E-CHF=CHF | 1,2-difluoroethylene |
| Z-HFO-1132 | Z-CHF=CHF | 1,2-difluoroethylene |
| HFO-1132a | CH₂=CF₂ | vinylidene fluoride |
| HCO-1140 | CH₂=CHCl | vinyl chloride (monomer) |

The compounds listed in Table 1 are available commercially or may be prepared by processes known in the art.

Many of the compounds of Table 1 exist as different configurational isomers or stereoisomers. When the specific isomer is not designated, the present invention is intended to include all single configurational isomers, single stereoisomers, or any combination thereof. For instance, HFO-1234ze is meant to represent the E-isomer, Z-isomer, or any combination or mixture of both isomers in any ratio. As another example, HFO-1224yd is meant to represent the E-isomer, Z-isomer, or any combination or mixture of both isomers in any ratio.

Another embodiment of the invention relates to any of the foregoing compositions and optionally further comprising at least one antioxidant.

Another embodiment of the invention relates to any of the foregoing compositions further comprising HFO-1234ze, HFO-1225yeZ and 3,3,3-trifluoropropyne.

Another embodiment of the invention relates to any of the foregoing compositions wherein the composition is substantially free of at least one of ammonia and CF₃I.

Another embodiment of the invention relates to any of the foregoing compositions wherein the composition consists essentially of HFO-1234yf, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, and 3,3,3-trifluoropropyne, and the gas component.

Another embodiment of the invention relates to any of the foregoing compositions wherein the composition consists essentially of HFO-1234yf, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, and 3,3,3-trifluoropropyne, and the gas component.

Another embodiment of the invention relates to any of the foregoing compositions wherein the composition consists essentially of HFO-1234yf, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, and 3,3,3-trifluoropropyne, an oligomer having a linking unit chosen from least one of the following: -CF(CF₃)CH₂-CH₂CF(CF₃)-, or -CF(CF₃)CH₂-CF(CF₃)CH₂-, or -CH₂CF(CF₃)-CF(CF₃)CH₂-, or -CF(CF₃)CH₂-O-O-CH₂CF(CF₃)-, or-CF(CF₃)CH₂-O-O-CF(CF₃)CH₂-, or -CH₂CF(CF₃)-O-O-CF(CF₃)CH₂-, or-CF(CF₃)CH₂-O-CH₂CF(CF₃)- , or -CF(CF₃)CH₂-O-CF(CF₃)CH₂-, or-CH₂CF(CF₃)-O-CF(CF₃)CH₂-, and the gas component.

Another embodiment of the invention relates to use of any of the foregoing compositions for heating or cooling.

Another embodiment of the invention relates to a container with a refrigerant comprising any of the foregoing compositions.

The embodiments of the invention can be used alone or in combinations with each other, and that different embodiments can be combined and form part of the invention.

In one embodiment of the invention, the inventive compositions are substantially free of oligomers, homopolymers or other polymeric products derived from a hydrofluoroolefin. By "substantially free" it is meant that the composition contains less than about 1 wt. %, less than about 0.07 wt.%, less than about 0.03 wt.% and and in some cases about 0 ppm by weight of such products when measured by IR or NMR. Polymer that may be present may also be observed visually.

In another embodiment of the invention, the compositions are substantially free of certain conventional inhibitor compounds including sesquiterpene compounds such as at least one member selected from the group consisting of famesol, famesene; ionic liquids, phenols, benzophenone derivatives, and mixtures thereof. By substantially free it is meant that the inventive compositions contains less than about 500 ppm, typically less than about 250 ppm, in some cases about 100 ppm and in some cases about 0 ppm of such conventional inhibitors.

The inventive compositions have a variety of utilities heat transfer mediums (such as heat transfer fluids and refrigerants for use in refrigeration systems, refrigerators, air conditioning systems, heat pumps, chillers, and the like), among others. The inventive compositions are particularly suited for use in mobile air conditioning systems and as a component for making a refrigerant blend for use in stationary heat transfer systems.

A heat transfer medium (also referred to herein as a heat transfer fluid, a heat transfer composition or a heat transfer fluid composition) is a working fluid used to carry heat from a heat source to a heat sink.

A refrigerant is a compound or mixture of compounds that function as a heat transfer fluid in a cycle wherein the fluid undergoes a phase change from a liquid to a gas (or vapor) and back or vice versa. The present invention provides a refrigerant (or a refrigerant composition) comprising 2,3,3,3-tetrafluoropropene, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, and the at least one gas component, and a lubricant. With respect to the refrigerant, the inhibitor is present in at least the liquid fluoroolefin (1234yf) containing phase of the refrigerant as well as a lubricant component of the refrigerant. In one embodiment, about 10 to about 80 wt%, about 25 to about 75 wt% and, in some cases, about 45 to about 60 wt% of the inhibitor is present in the liquid fluoroolefin phase with the remainder predominantly present in the lubricant phase. In one embodiment, the refrigerant comprises a vapor phase comprising at least 1234yf and a liquid phase comprising 1234yf and at least one lubricant.

In one particular embodiment, the inventive composition comprises HFO-1234yf having a purity of greater than 99 wt%, greater than 99.5 wt% pure and in some cases greater than 99.5 to 99.98 weight percent pure.

In another particular embodiment, the composition comprises greater than about 99.5 wt% HFO-1234yf and one or more members selected from the group consisting of HFO-1225ye, HFO-1243zf, HFO-1234ze, HFC-236ea, HFC-244bb, HFC-245fa, HFC-245eb, HFC-245cb, 3,3,3-trifluoropropyne, and mixtures thereof (see Table 2 for those compounds not disclosed in Table 1). The amount of HFO-1225ye (E/Z isomers) can range from greater than 0 to about 200 ppm by weight, about 1 to about 150 ppm and in some cases about 5 to about 50 ppm. The amount of HFO-1243zf can range from about 0.1 to about 250 ppm, about 10 to about 200 ppm and in some cases about 15 to about 150 ppm. The amount of HFO-1234ze (E isomer) can range from about 1 to about 1,500 ppm, about 5 to about 1,000 ppm and in some cases about 50 to 500 ppm. The amount of HFC-236ea can range from about 1 to about 50 ppm, about 5 to about 25 ppm and in some cases about 10 to about 20 ppm. The amount of HFC-245fa, HFC-245eb and/or HFC-245cb can range from about 0 to about 20 ppm, about 1 to about 15 ppm and in some cases about 5 to about 10 ppm. The amount of 3,3,3-trifluoropropyne can range from about 0 to about 500 ppm, about 1 to about 300 ppm and in some cases about 5 to about 100 ppm.

**TABLE 2**

| **Name** | **Structure** | **Chemical name** |
|---|---|---|
| HFC-236ea | CF₃CHFCHF₂ | 1,1,1,2,3,3-hexafluoropropane |
| HCFC-244bb | CF₃CFClCH₃ | 2-chloro-1,1,1,2-tetrafluoropropane |
| HFC-245fa | CF₃CH₂CHFCl | 3-chloro-1,1,1,3-tetrafluoropropane |
| HFC-245eb | CF₃CHFCH₂F | 1,1,1,2,3-pentafluoropropane |
| HFC-245cb | CF₃CF₂CH₃ | 1,1,1,2,2-pentafluoropropane |

In another embodiment, the composition comprises at least one additional compound selected from the group consisting of FO-1114, HFO-1123, HCFO-1131a, HFCO-1131-trans, HCO-1140, HCFO-1214ya, FO-1216, HCFO-1224yd, HFO-1225ye(E), HCFO-1233zd(E), HFO-1234ze(E), HFO-1252, HFC-143a, HCFC-225, HFC-245eb, HFC-254eb, HFC-263fb, CF₃CF₂I, HFC-236fa, HCFC-142b, HCFC-244cc, HCFO-1223, HFO-1132a, HFO-2316 (hexafluorobutadiene), HFO-1327 isomer, HFO-1336mzzE, HFO-1336 isomer, HFO-1234ze(Z) and HCFO-1224 isomer. In one particular embodiment, the fluoroolefin component comprises HFO-1234yf and greater than zero and less than about 1 wt.%, less than about 0.5 wt% and in some cases less than 0.25 wt% of additional compounds.

In a further embodiment, the inventive inhibitor can be used with at least one of HCFO-1233zd and HCFO-1224yd, and compositions of blends comprising at least one of HCFO-1233zd and HCFO-1224yd.

See Table 3 for those compounds not disclosed in Table 1 or Table 2.

**TABLE 3**

| **Name** | **Structure** | **Chemical name** |
|---|---|---|
| HCFC-142b | CClF₂CH₃ | 1-chloro-1,1-difluoroethane |
| HFC-143a | CF3CH3 | 1,1,1-trifluoroethane |
| | CF₃CF₂I | 1,1,1,2,2-pentafluoro-2-iodoethane |
| FO-1114 | CF₂CF₂ | Tetrafluoroethylene |
| HCFO-1131a | CClF=CH₂ | 1-chloro-1-fluoroethylene |
| trans-HFC-1131 | CHCl=CHF | trans-1-chloro-2-fluoroethylene |
| HCFC-225 | C₃F₅Cl₂ | dichloro-pentafluoropropane |
| HFC-254eb | CF₃CHFCH₃ | 1,1,1,2-tetrafluoropropane |
| HFC-263fb | CF₃CH₂CH₃ | 1,1,1-trifluoropropane |
| HFC-236fa | CF₃CH₂CF₂Cl | 1-chloro-1,1,3,3,3-pentafluoropropane |
| HCFC-244cc | CClF₂CH₂CHF₂ | 1-Chloro-1,1,2,2-tetrafluoropropane |
| HCFO-1214ya | CF₃CF=CCl₂ | 1,1-dichloro-2,3,3,3-tetrafluoropropene |
| HFO-1216 | CF₃CF=CCF₂ | hexafluoropropene |
| HCFO-1223 | C₃HF₃Cl₂ | dichloro-trifluoropropene |
| HCFO-1224 isomers | C₃HClF₄ | 1-chloro-2,3,3,3-tetrafluoropropene |
| HFO-1252 isomers | C₃H₄F₂ | difluoropropene |
| HFO-1327 isomers | C₄HF₆ | hexafluorobutene |
| HFO-1336 isomers | C₄H₂F₆ | E- and/or Z-1,3,3,4,4,4-hexafluorobut-1-ene |
| HFO-2316 | CF₂=CFCF=CF₂ | hexafluorobutadiene |

Difluoromethane (HFC-32 or R-32) is commercially available or may be made by methods known in the art. In one embodiment, the HFC-32 component of the inventive composition comprises HFC-32 having a purity of greater than 99 wt%, greater than 99.5 wt% pure and in some cases greater than 99.5 to 99.98 weight percent pure. In another particular embodiment, the HFC-32 component comprises greater than 99.99 wt% pure. In one embodiment, the HFC-32 component further comprises at least one additional compound selected from the group consisting of HFC-23 (trifluoromethane), HCFC-31 (chlorofluoromethane), HFC-41 (fluoromethane), HFC-143a (1,1,1-trifluoroethane), HCFC-22 (chlorodifluoromethane), CFC-12 (dichlorodifluoromethane), HCC-40 (chloromethane), and HFC-134a (1,1,1,2-tetrafluoroethane).

In some embodiments the present compositions comprise HFO-1234yf and HFC-32 in particular weight ratios. Of note are compositions comprising from about 20 to about 85 weight percent HFO-1234yf and from about 80 to about 15 weight percent HFC-32 relative to the total amount of HFO-1234yf and HFC-32 in the composition. In certain embodiments the compositions comprise from about 20 to about 40 weight percent HFO-1234yf and from about 60 to about 80 weight percent HFC-32. In other embodiments, the compositions contain from about 30 to about 32 weight percent HFO-1234yf and from about 68 to about 70 weight percent HFC-32. In other embodiments, the compositions comprise from about 63 to about 67 weight percent HFO-1234yf and from about 33 to about 37 weight percent HFC-32. In other embodiments, the compositions comprise from about 77 to about 80 weight percent HFO-1234yf and from about 20 to about 23 weight percent HFC-32.

In particular embodiments the compositions may contain:
about 31.1 wt% HFO-1234yf and about 68.9 wt% HFC-32;
about 31 wt% HFO-1234yf and about 69 wt% HFC-32;
about 65 wt% HFO-1234yf and about 35 wt% HFC-32; or
about 78.5 wt% HFO-1234yf and about 21.5 wt% HFC-32.

Pentafluoroethane (HFC-125 or R-32) is commercially available or may be made by methods known in the art. In one embodiment, the HFC-125 component of the inventive composition comprises HFC-125 having a purity of greater than 99 wt%, greater than 99.5 wt% pure and in some cases greater than 99.5 to 99.98 weight percent pure. In another particular embodiment, the HFC-125 component comprises greater than 99.99 wt% pure. In one embodiment, the HFC-125 component further comprises at least one additional compound selected from the group consisting of HFC-23 (trifluoromethane, HFC-32 (difluoromethane), HFC-143a (1,1,1-trifluoroethane), FC-115 (chloropentafluoroethane), HFC-134a (1,1,1,2-tetrafluoroethane), CFO-1113 (chlorotrifluoroethylene), and HC-40 (chloromethane).

In some embodiments the present compositions comprise HFO-1234yf, HFC-32 and HFC-125 in particular weight ratios. Of note are compositions comprising from about 5 to about 80 weight percent HFO-1234yf and from about 80 to about 5 weight percent HFC-32 and from about 80 to about 5 weight percent HFC-125 relative to the total amount of HFO-1234yf and HFC-32 and HFC-125 in the composition. In certain embodiments the compositions comprise from about 10 to about 50 weight percent HFO-1234yf and from about 70 to about 10 weight percent HFC-32 and from about 60 to about 5 weight percent HFC-125.

In particular embodiments the compositions may contain:
about 26 wt% HFO-1234yf, about 67 wt% HFC-32 and about 7 wt% HFC-125; or
about 30 wt% HFO-1234yf, about 11 wt% HFC-32 and about 59 wt% HFC-125.

1,1,1,2-Tetrafluoroethane (HFC-134a or R-134a) is commercially available or may be made by methods known in the art. In one embodiment, the HFC-134a component of the inventive composition comprises HFC-134a having a purity of greater than 99 wt%, greater than 99.5 wt% pure and in some cases greater than 99.5 to 99.98 weight percent pure. In another particular embodiment, the HFC-134a component comprises greater than 99.99 wt% pure. In one embodiment, the HFC-134a component further comprises at least one additional compound selected from the group consisting of HFC-32, HFC-125, HFC-245cb, HFC-134, HFC-152a, HFC-161, CFC-114, CFC-114a, HCFO-1122, HC-40, HCFC-124, CFC-31, HFC-143a, FO-1318my, HFO-1225ye, CFC-217ba, CFC-217ca, HCFC-22, HFO-1225zc, and HCO-1140.

In some embodiments the present compositions comprise HFO-1234yf, HFC-32, HFC-125, and HFC-134a in particular weight ratios. Of note are compositions comprising from about 5 to about 80 weight percent HFO-1234yf and from about 80 to about 5 weight percent HFC-32 and from about 80 to about 5 weight percent HFC-125 and from about 80 to about 5 weight percent HFC-134a relative to the total amount of HFO-1234yf and HFC-32 and HFC-125 and HFC-134a in the composition. In certain embodiments the compositions comprise from about 10 to about 50 weight percent HFO-1234yf and from about 50 to about 10 weight percent HFC-32 and from about 50 to about 10 weight percent HFC-125 and from about 5 to about 50 weight percent HFC-134a.

In particular embodiments the compositions may contain;
about 31 wt% HFO-1234yf, about 20 wt% HFC-32, about 20 wt% HFC-125 and about 29 wt% HFC-134a; or
about 25.3 wt% HFO-1234yf, about 24.3 wt% HFC-32, about 24.7 wt% HFC-125 and about 25.7 wt% HFC-134a.

In some embodiments the present compositions comprise HFO-1234yf, HFC-32, HFC-125, HFC-134a and CO₂ in particular weight ratios. Of note are compositions comprising from about 5 to about 80 weight percent HFO-1234yf and from about 80 to about 5 weight percent HFC-32 and from about 80 to about 5 weight percent HFC-125 and from about 80 to about 5 weight percent HFC-134a and from about 1 weight percent to about 30 weight percent CO₂ of relative to the total amount of HFO-1234yf and HFC-32 and HFC-125 and HFC-134a and CO₂ in the composition. In certain embodiments the compositions comprise from about 10 to about 30 weight percent HFO-1234yf and from about 50 to about 20 weight percent HFC-32 and from about 50 to about 20 weight percent HFC-125 and from about 5 to about 30 weight percent HFC-134a and from about 1 weight percent to about 10 weight percent CO₂.

In particular embodiments the compositions may contain: about 14 wt% HFO-1234yf and about 36 wt% HFC-32 and about 30 wt% HFC-125 and about 14 wt% HFC-134a and about 6 wt % CO₂.

1,1-Difluoroethane (HFC-152a or R-152a) is commercially available or may be made by methods known in the art. In one embodiment, the HFC-152a component of the inventive composition comprises HFC-152a having a purity of greater than 99 wt%, greater than 99.5 wt% pure and in some cases greater than 99.5 to 99.98 weight percent pure. In another particular embodiment, the HFC-152a component comprises greater than 99.99 wt% pure. In one embodiment, the HFC-32 component further comprises at least one additional compound selected from the group consisting of HFC-161 (ethyl fluoride), HC-160 (ethyl chloride), HCO-1140 (vinyl chloride), HC-40 (chloromethane).

In some embodiments the present compositions comprise HFO-1234yf, HFC-32, and HFC-152a in particular weight ratios. Of note are compositions comprising from about 50 to about 90 weight percent HFO-1234yf and from about 5 to about 60 weight percent HFC-32 and from about 5 to about 30 weight percent HFC-152a relative to the total amount of HFO-1234yf and HFC-32 and HFC-52a in the composition. In certain embodiments the compositions comprise from about 60 to about 80 weight percent HFO-1234yf and from about 10 to about 50 weight percent HFC-32 and from about 10 to about 20 weight percent HFC-152a.

In some embodiments the present compositions comprise HFO-1234yf, HFC-134a, and HFC-152a in particular weight ratios. Of note are compositions comprising from about 30 to about 90 weight percent HFO-1234yf and from about 1 to about 30 weight percent HFC-134a and from about 5 to about 30 weight percent HFC-152a relative to the total amount of HFO-1234yf and HFC-134a and HFC-152a in the composition. In certain embodiments the compositions comprise from about 50 to about 80 weight percent HFO-1234yf and from about 5 to about 20 weight percent HFC-134a and from about 10 to about 20 weight percent HFC-152a.

In particular embodiments the compositions may contain;
about 70 wt% HFO-1234yf, about 18 wt% HFC-32, and about 12 wt% HFC-152a; or
about 50 wt% HFO-1234yf, about 35 wt% HFC-32, and about 10 wt% HFC-152a; or
about 77.5 wt% HFO-1234yf, about 8.5 wt% HFC-134a, and about 14 wt% HFC-152a; or
about 78 wt% HFO-1234yf, about 7.5 wt% HFC-32, and about 14.5 wt% HFC-152a; or
about 82 wt% HFO-1234yf, about 4 wt% HFC-32, and about 14 wt% HFC-152a.

E-1,2-Difluoroethylene (*E*-HFO-1132 or trans-1132) is commercially available or may be made by methods known in the art. In one embodiment, the *E*-HFO-1132 component of the inventive composition comprises *E*-HFO-1132 having a purity of greater than 99 wt%, greater than 99.5 wt% pure and in some cases greater than 99.5 to 99.98 weight percent pure. In another particular embodiment, the E-HFO-1132 component comprises greater than 99.99 wt% pure. In one embodiment, the *E*-HFO-1132 component further comprises at least one additional compound selected from the group consisting of HFO-1141, chlorotrifluoromethane (CFC-13), trifluoromethane (CFC-23), difluoromethane (CFC-32), 1-chloro-1,1-difluoroethane (HFC-142b), 1,1,1-trifluoroethane (HFC-143a), tetrafluoroethylene (HFO-1114), 1-chloro-2,2-difluoroethylene (HCFO-1122), acetylene, ethylene, 1,2-dichloro-1,2-difluoroethane (HFC-132), 1,1,2-trifluoroethane (HFC-143), 1-chloro-1,2-difluoroethylene (HCFO-1122a), trifluoroethylene (HFO-1123), 1-chloro-2-fluoroethylene (HFO-1131), (Z)-1,2-difluoroethylene ((Z)-HFO-1132).

In some embodiments the present compositions comprise HFO-1234yf, and *E*-HFO-1132 in particular weight ratios. Of note are compositions comprising from about 20 to about 90 weight percent HFO-1234yf and from about 80 to about 10 weight percent E-HFO-1132 relative to the total amount of HFO-1234yf and E-HFO-1132 in the composition. In certain embodiments the compositions comprise from about 50 to about 80 weight percent HFO-1234yf and from about 50 to about 20 weight percent E-HFO-1132.

In some embodiments the present compositions comprise HFO-1234yf, HFC-32, and E-HFO-1132 in particular weight ratios. Of note are compositions comprising from about 10 to about 50 weight percent HFO-1234yf and from about 20 to about 60 weight percent HFC-32 and from about 10 to about 60 weight percent *E*-HFO-1132 relative to the total amount of HFO-1234yf and HFC-32 and *E*-HFO-1132 in the composition. In certain embodiments the compositions comprise from about 15 to about 30 weight percent HFO-1234yf and from about 30 to about 50 weight percent HFC-32 and from about 20 to about 50 weight percent *E*-HFO-1132.

In particular embodiments the compositions may contain;
about 23.8 wt% HFO-1234yf, about 44.2 wt% HFC-32, about 32 wt% E-HFO-1132; or
about 77 wt% HFO-1234yf, and about 23 wt% *E*-HFO-1132.

With respect to the foregoing disclosure of the compositions comprising 1234yf, and at least one additional refrigerant selected from the group consisting of HFC-32, HFC-125, HFC-134a, HFC-152a, *E*-HFO-1132 and CO₂, it should be recognized the inventive compositions also comprise at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, and a gas component, wherein the gas component is selected from the group consisting of O₂, N₂, Ar, CO₂, CH₄, He, and N₂/O₂ mixtures having a ratio of N₂/O₂ of greater than or equal to 78/21. Optionally, the foregoing compositions may further comprise one or more oligomers having a repeating unit of -{[CF(CF₃)CH₂]ₓ(Oₙ)}_{y}[CF(CF₃)CH₂]_{z}-, where x, y ≥ 1, n = 0, 1 or 2, and z ≥ 0.

When an inhibitor is present, any suitable effective amount of inhibitor may be used in the foregoing compositions. As described herein, the phrase "effective amount" refers to an amount of inhibitor of the present invention which, when added to the composition results in a composition wherein the 1234yf will not interact with an initiator, and/or degrade to produce as great a reduction in performance, for example, when in use in a cooling apparatus as compared to the composition without an inhibitor and be present in a liquid phase containing 1234yf as well as a lubricant. For cooling apparatus, such effective amounts of inhibitor may be determined by way of testing under the conditions of standard test ASHRAE 97-2007 (RA 2017)

In a certain embodiment of the present invention, an effective amount may be said to be that amount of inhibitor that when included as a component of the composition when the composition further comprises a lubricant, allows a cooling apparatus utilizing said composition to perform at the same level of refrigeration performance and cooling capacity as if a composition comprising 1,1,1,2-tetrafluoroethane (R-134a), or other standard refrigerant (R-12, R-22, R-502, R-507A, R-508, R401A, R401B, R402A, R402B, R408, R-410A, R-404A, R407C, R-413A, R-417A, R-422A, R-422B, R-422C, R-422D, R-423, R-114, R-11, R-113, R-123, R-124, R236fa, or R-245fa) depending upon what refrigerant may have been used in a similar system in the past, were being utilized as the working fluid.

In certain embodiments, the instant invention employs effective amounts of at least one of the foregoing inhibitors. While any suitable effective amount can be employed, effective amounts comprise from about 0.001 wt% to about 10 wt%, about 0.01 wt% to about 5 wt%, about 0.3 wt% to about 4 wt%, about 0.3 wt% to about 1 wt% based on the total weight of the compositions. In one embodiment, an effective amount comprises about 10 to about 2,000 ppm by weight, about 10 to about 1,000 ppm and in some cases about 10 to about 500 ppm of at least one inhibitor.

The composition comprises a gas component selected from the group consisting of O₂, N₂, Ar, CO₂, CH₄, He, and N₂/O₂ mixtures having a ratio of N₂/O₂ of greater than or equal to 78/21. The total amount of gas component is typically present in an amount in the range of from about 0.01 to about 15 vol% or from about 0.1 to about 5 vol% or from about 0.1 to about 3 vol% or from about 0.1 to about 1.5 vol%, of Non-Condensable Gas (NCG) or Non-Absorbable Gas (NAG), based on 2008 Appendix C for Analytical Procedures for AHRI Standard 700-2014, Part 5.

In one embodiment of the invention, the composition further comprises water. Water may be present in any amount from about 0 up to about 20 ppm. For example, water may be present in an amount of greater than 0 to about 10 ppm.

The gas component and water, if present, may be introduced to the composition with the 1234yf component or with the inhibitor or through material transport.

In another embodiment, the foregoing compositions of the present invention are substantially free of additional compounds and, in particular, substantially free of at least one of dimethyl ether, CF₃I, ammonia, and carbon dioxide. In one preferred aspect of this embodiment, the foregoing compositions are substantially free of CF₃I. By "substantially free of additional compounds" it is meant that the compositions as well as the inhibitor comprise less than about 10 wt%, usually less than about 5 wt% and in some cases 0 wt% of the additional compounds.

In other embodiments of the invention, the 1234yf component of the composition comprises at least about 99 mass% HFO-1234yf and greater than 0 but less than 1 mass% of at least one member selected from the group consisting of HFC-134a, HFO-1243zf, HFO-1225ye, HFO-1234ze, 3,3,3-trifluoropropyne, HCFO-1233xf, HFC-245cb and combinations thereof.

If desired, the blended composition can further comprise at least one additional member selected from the group consisting of HCC-40, HCFC-22, CFC-115, HCFC-124, HCFC-1122, and CFC-1113. The amount of the additional member can comprise greater than 0 to about 5 wt.%, about 0 to about 2 wt.% and in some cases about 0 to about 0.5 wt.%. In one particular embodiment, the foregoing amounts of additional members are blended with HFO-1234yf.

In one embodiment, the present compositions comprise:
a) a composition consisting essentially of HFO-1234yf at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, and
b) a gas component selected from the group consisting of O₂, N₂, Ar, CO₂, CH₄, He, and N₂/O₂ mixtures having a ratio of N₂/O₂ of greater than or equal to 78/21

In another embodiment, the present compositions comprise:
a) a composition consisting essentially of HFO-1234yf at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃,
b) one or more oligomers having a repeating unit of -{[CF(CF₃)CH₂]ₓ(Oₙ)}_{y}[CF(CF₃)CH₂]_{z}-, where x, y ≥ 1, n = 0, 1 or 2, and z ≥ 0, and
c) a gas component selected from the group consisting of O₂, N₂, Ar, CO₂, CH₄, He, and N₂/O₂ mixtures having a ratio of N₂/O₂ of greater than or equal to 78/21

The lubricant component of the compositions can comprise those suitable for use with refrigeration or air-conditioning apparatus. Among these lubricants are those conventionally used in compression refrigeration apparatus utilizing chlorofluorocarbon refrigerants. Such lubricants and their properties are discussed in the 1990 ASHRAE Handbook, Refrigeration Systems and Applications, chapter 8, titled "Lubricants in Refrigeration Systems", pages 8.1 through 8.21. Lubricants of the present invention may comprise those commonly known as "mineral oils" in the field of compression refrigeration lubrication. Mineral oils comprise paraffins (i.e. straight-chain and branched-carbon-chain, saturated hydrocarbons), naphthenes (i.e. cyclic or ring structure saturated hydrocarbons, which may be paraffins) and aromatics (i.e. unsaturated, cyclic hydrocarbons containing one or more rings characterized by alternating double bonds). Lubricants of the present invention further comprise those commonly known as "synthetic oils" in the field of compression refrigeration lubrication. Synthetic oils comprise alkylaryls (i.e. linear and branched alkyl alkylbenzenes), synthetic paraffins and naphthenes, silicones, and poly-alpha-olefins. Representative conventional lubricants of the present invention are the commercially available BVM 100 N (paraffinic mineral oil sold by BVA Oils), naphthenic mineral oil commercially available under the trademark from Suniso^{®} 3GS and Suniso^{®} 5GS by Crompton Co., naphthenic mineral oil commercially available from Pennzoil under the trademark Sontex^{®} 372LT, naphthenic mineral oil commercially available from Calumet Lubricants under the trademark Calumet^{®} RO-30, linear alkylbenzenes commercially available from Shrieve Chemicals under the trademarks Zerol^{®} 75, Zerol^{®} 150 and Zerol^{®} 500 and branched alkylbenzene, sold by Nippon Oil as HAB 22.

In another embodiment, the lubricant component of the present inventive compositions can comprise those which have been designed for use with hydrofluorocarbon refrigerants and are miscible with refrigerants and inhibitors of the present invention under compression refrigeration and air-conditioning apparatus' operating conditions. Such lubricants and their properties are discussed in "Synthetic Lubricants and High-Performance Fluids", R. L. Shubkin, editor, Marcel Dekker, 1993. Such lubricants include, but are not limited to, polyol esters (POEs) such as Castrol^{®} 100 (Castrol, United Kingdom), polyalkylene glycols (PAGs) such as RL-488A from Dow (Dow Chemical, Midland, Michigan), and polyvinyl ethers (PVEs).

Lubricants of the present invention are selected by considering a given compressor's requirements and the environment to which the lubricant will be exposed. The amount of lubricant can range from about 1 to about 50, about 1 to about 20 and in some cases about 1 to about 3. In one particular embodiment, the foregoing compositions are combined with a PAG lubricant for usage in an automotive A/C system having an internal combustion engine. In another particular embodiment, the foregoing compositions are combined with a POE lubricant for usage in an automotive A/C or heat pump system having an electric or hybrid electric drive train.

The inhibitor has sufficient miscibility in the lubricant such that a portion of the inhibitor is present within the lubricant. The amount of inhibitor present in the lubricant may vary when the composition is employed as a working fluid or heat transfer medium.

In one embodiment of the invention, the composition can comprise at least one additive which can improve the refrigerant and air-conditioning system lifetime and compressor durability are desirable. In one aspect of the invention, the foregoing compositions comprise at least one member selected from the group consisting of acid scavengers, performance enhancers, and flame suppressants.

Additives which can improve the refrigerant and A/C lifetime and compressor durability are desirable. In one aspect of the invention, the inventive composition is used to introduce lubricant into the A/C system as well as other additives, such as a) acid scavengers, b) performance enhancers, and c) flame suppressants.

An acid scavenger may comprise a siloxane, an activated aromatic compound, or a combination of both. Serrano et al (paragraph 38 of US 2011/0272624 A1), discloses that the siloxane may be any molecule having a siloxy functionality. The siloxane may include an alkyl siloxane, an aryl siloxane, or a siloxane containing mixtures of aryl and alkyl substituents. For example, the siloxane may be an alkyl siloxane, including a dialkylsiloxane or a polydialkylsiloxane. Preferred siloxanes include an oxygen atom bonded to two silicon atoms, i.e., a group having the structure: SiOSi. Exemplary siloxanes that may be used include hexamethyldisiloxane, polydimethylsiloxane, polymethylphenylsiloxane, dodecamethylpentasiloxane, decamethylcyclo-pentasiloxane, decamethyltetrasiloxane, octamethyltrisiloxane, or any combination thereof.

In one aspect of the invention, the siloxane is an alkylsiloxane containing from about 1 to about 12 carbon atoms, such as hexamethyldisiloxane. The siloxane may also be a polymer such as polydialkylsiloxane, Where the alkyl group is a methyl, ethyl, propyl, butyl, or any combination thereof. Suitable polydialkylsiloxanes have a molecular weight from about 100 to about 10,000. Highly preferred siloxanes include hexamethyldisiloxane, polydimethylsiloxane, and combinations thereof. The siloxane may consist essentially of polydimethylsiloxane, hexamethyldisoloxane, or a combination thereof.

The activated aromatic compound may be any aromatic molecule activated towards a Friedel-Crafts addition reaction, or mixtures thereof. An aromatic molecule activated towards a Friedel-Crafts addition reaction is defined to be any aromatic molecule capable of an addition reaction with mineral acids. Especially aromatic molecules capable of addition reactions with mineral acids either in the application environment (AC system) or during the ASHRAE 97: 2007 "Sealed Glass Tube Method to Test the Chemical Stability of Materials for Use within Refrigerant Systems" thermal stability test. Exemplary activated aromatic molecules that may be employed in a composition according to the teachings herein include diphenyl oxide (i.e., diphenyl ether), methyl phenyl ether (e.g., anisole), ethyl phenyl ether, butyl phenyl ether or any combination thereof. One highly preferred aromatic molecule activated to Wards a Friedel-Crafts addition reaction is diphenyl oxide.

The acid scavenger (e.g., the activated aromatic compound, the siloxane, or both) may be present in any concentration that results in a relatively low total acid number, a relatively low total halides concentration, a relatively low total organic acid concentration, or any combination thereof. Preferably the acid scavenger is present at a concentration greater than about 0.0050 wt%, more preferably greater than about 0.05 wt% and even more preferably greater than about 0.1 wt% (e.g. greater than about 0.5 wt%) based on the total weight of the composition. The acid scavenger preferably is present in a concentration less than about 3 wt%, more preferably less than about 2.5 wt% and most preferably greater than about 2 wt% (e. g. less than about 1.8 wt%) based on the total Weight of the composition.

Additional examples of acid scavengers which may be included in the composition and preferably are excluded from the composition include those described by Kaneko (U.S. patent application Ser. No. 11/575,256, published as U.S. Patent Publication 2007/0290164, paragraph 42), such as one or more of: phenyl glycidyl ethers, alkyl glycidyl ethers, alkyleneglycolglycidylethers, cyclohexeneoxides, otolenoxides, or epoxy compounds such as epoxidized soybean oil, and those described by Singh et al. (U.S. patent application Ser. No. 11/250,219, published as 20060116310, paragraphs 34-42).

Preferred additives include those described in U.S. Pat. Nos. 5,152,926; 4,755,316. In particular, the preferred extreme pressure additives include mixtures of (A) tolyltriazole or substituted derivatives thereof, (B) an amine (e.g. Jeffamine M-600) and (C) a third component which is (i) an ethoxylated phosphate ester (e.g. Antara LP-700 type), or (ii) a phosphate alcohol (e.g. ZELEC 3337 type), or (iii) a Zinc dialkyldithiophosphate (e.g. Lubrizol 5139, 5604, 5178, or 5186 type), or (iv) a mercaptobenzothiazole, or (v) a 2,5-dimercapto-1,3,4-triadiaZole derivative (e. g. Curvan 826) or a mixture thereof. Additional examples of additives which may be used are given in U.S. Pat. No. 5,976,399 (Schnur, 5:12-6:51).

Acid number is measured according to ASTM D664-01 in units of mg KOH/g. The total halides concentration, the fluorine ion concentration, and the total organic acid concentration is measured by ion chromatography. Chemical stability of the refrigerant system is measured according to ASHRAE 97: 2007 (RA 2017) "Sealed Glass Tube Method to Test the Chemical Stability of Materials for Use within Refrigerant Systems". The viscosity of the lubricant is tested at 40°C according to ASTM D-7042.

Mouli et al. (WO 2008/027595 and WO 2009/042847) teach the use of alkyl silanes as a stabilizer in refrigerant compositions containing fluoroolefins. Phosphates, phosphites, epoxides, and phenolic additives also have been employed in certain refrigerant compositions. These are described for example by Kaneko (U.S. patent application Ser. No. 11/575,256, published as U.S. Publication 2007/0290164) and Singh et al. (U.S. patent application Ser. No. 11/250,219, published as U.S. Publication 2006/0116310).

Preferred flame suppressants include those described in patent application "Refrigerant compositions containing fluorine substituted olefins CA 2557873 A1", along with fluorinated products such as HFC-125 and/or Krytox^{®} lubricants, described in patent application "Refrigerant compositions comprising fluoroolefins and uses thereof WO2009018117A1."

The compositions of the present invention may be prepared by any convenient method to combine the desired amount of the individual components. A preferred method is to weigh the desired component amounts and thereafter combine the components in an appropriate vessel. Agitation may be used, if desired.

The present invention further relates to a process for producing cooling comprising condensing a composition comprising 1234yf, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, and at least one gas component, wherein the gas component is selected from the group consisting of O₂, N₂, Ar, CO₂, CH₄, He, and N₂/O₂ mixtures having a ratio of N₂/O₂ of greater than or equal to 78/21, and thereafter evaporating said composition in the vicinity of a body to be cooled.

The present invention further relates to a process for producing cooling comprising condensing a composition comprising 1234yf, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, one or more oligomers having a repeat linking unit - {[CF(CF₃)CH₂]ₓ(Oₙ)}_{y}[CF(CF₃)CH₂]_{z}- , where, x, y ≥ 1, n = 0, 1 or 2, and z ≥ 0, and at least one gas component, wherein the gas component is selected from the group consisting of O₂, N₂, Ar, CO₂, CH₄, He, and N₂/O₂ mixtures having a ratio of N₂/O₂ of greater than or equal to 78/21, and thereafter evaporating said composition in the vicinity of a body to be cooled.

A body to be cooled may be any space, location or object requiring refrigeration or air-conditioning. In stationary applications the body may be the interior of a structure, i.e. residential or commercial, or a storage location for perishables, such as food or pharmaceuticals. For mobile refrigeration applications the body may be incorporated into a transportation unit for the road, rail, sea or air. Certain refrigeration systems operate independently with regards to any moving carrier, these are known as "intermodal" systems. Such intermodal systems include "containers" (combined sea/land transport) as well as "swap bodies" (combined road and rail transport).

The present invention further relates to a process for producing heat comprising condensing a composition comprising 1234yf, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, and at least one gas component, wherein the gas component is selected from the group consisting of O₂, N₂, Ar, CO₂, CH₄, He, and N₂/O₂ mixtures having a ratio of N₂/O₂ of greater than or equal to 78/21, in the vicinity of a body to be heated, and thereafter evaporating said composition.

The present invention further relates to a process for producing heat comprising condensing a composition comprising 1234yf, at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, one or more oligomers having a repeat linking unit-{[CF(CF₃)CH₂]ₓ(Oₙ)}_{y}[CF(CF₃)CH₂]_{z}- , where, x, y ≥ 1, n = 0, 1 or 2, and z ≥ 0, and at least one gas component, wherein the gas component is selected from the group consisting of O₂, N₂, Ar, CO₂, CH₄, He, and N₂/O₂ mixtures having a ratio of N₂/O₂ of greater than or equal to 78/21, in the vicinity of a body to be heated, and thereafter evaporating said composition.

A body to be heated may be any space, location or object requiring heat. These may be the interior of structures either residential or commercial in a similar manner to the body to be cooled. Additionally, mobile units as described for cooling may be similar to those requiring heating. Certain transport units require heating to prevent the material being transported from solidifying inside the transport container.

Another embodiment of the invention relates to a air-conditioning, refrigeration, heat pump, or chiller apparatus comprising at least one evaporator, at least one compressor, at least one condenser and at least one expansion device characterized as containing the foregoing compositions.

Another embodiment of the invention relates to storing the foregoing compositions in gaseous and/or liquid phases within a sealed container wherein the oxygen and/or water concentration in the gas and/or liquid phases ranges from about 3 vol ppm to less than about 3,000 vol ppm at a temperature of about 25°C, about 5 vol ppm to less than about 1,000 vol ppm and in some cases about 5 vol ppm to less than about 500 vol ppm.

The container for storing the foregoing compositions can be constructed of any suitable material and design that is capable of sealing the compositions therein while maintaining gaseous and liquids phases. Examples of suitable containers comprise pressure resistant containers such as a tank, a filling cylinder, and a secondary filling cylinder. The container can be constructed from any suitable material such as carbon steel, manganese steel, chromium-molybdenum steel, among other low-alloy steels, stainless steel and in some cases an aluminum alloy. The container can include a pierce top or valves suitable for dispensing flammable substances.

## Claims

1. A composition comprising 2,3,3,3-tetrafluoropropene, and at least one compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, and at least one gas component, wherein the gas component is selected from the group consisting of O₂, N₂, Ar, CO₂, CH₄, He, and N₂/O₂ mixtures having a ratio of N₂/O₂ of greater than or equal to 78/21.

2. The composition of claim 1, further comprising one or more oligomers having a repeating unit of
-{[CF(CF₃)CH₂]ₓ(Oₙ)}_{y}[CF(CF₃)CH₂]_{z}-,
where x, y ≥ 1, n = 0, 1 or 2, and z ≥ 0.

3. The composition of claim 1 or 2 further comprising at least one member selected from the group consisting of 1243zf, 1140, 1234ze, trifluoropropyne, 225ca, 225cb, 227ea, and 152a.

4. The composition of any one of claims 1 to 3 further comprising at least one member selected from the group consisting of 1234ze, 1243zf, Z-1336mzz, E-1336mzz, 1327mz, 1122, 1122a, 1123, 1233zd, 1224yd, E-1132, Z-1132, 1132a, 1112, E-1225ye, Z-1225ye, 1234zc, 1234ye, 1234yc, 1225zc, and 152a.

5. The composition of any one of claims 1 to 4 further comprising a lubricant.

6. The composition of any one of claims 1 to 5 further comprising water.

7. The composition of any one of claims 1 to 6 further comprising an inhibitor selected from the group consisting of d-limonene, I-limonene, α-pinene, β-pinene, α-terpinene, β-terpinene, γ-terpinene, and δ-terpinene, and mixtures of two or more thereof, preferably wherein the inhibitor comprises at least one of d-limonene and α-terpinene.

8. The composition of claim 7 wherein the inhibitor is present in an amount of about 30 to about 3,000 ppm.

9. A method for heating or cooling using the composition of any one of claims 1 to 8.

10. A container comprising the refrigerant composition of any one of claims 1 to 8.

11. Use of a composition of any one of claims 1 to 8 as a heat transfer fluid.

12. Use of a composition of any one of claims 1 to 8 as a refrigerant in a cycle wherein the fluid undergoes a phase change from a liquid to a gas and back or vice versa.

13. Use of a composition of any one of claims 1 to 8 as a refrigerant in a cycle wherein the fluid undergoes a phase change from a liquid to a gas and back or vice versa in air conditioners, freezers, refrigerators, heat pumps, water chillers, flooded evaporator chillers, direct expansion chillers, centrifugal chillers, walk-in coolers, mobile refrigerators, mobile air conditioning or heat pump units and combinations thereof.

14. A method of heat transfer wherein a working fluid is used to carry heat from a heat source to a heat sink, **characterized by** said working fluid comprising a composition of any one of claims 1 to 8.

15. The method of claim 14, wherein the working fluid is a refrigerant that undergoes a phase change from a liquid to a gas and back or vice versa.

## Patentansprüche

1. Zusammensetzung, umfassend 2,3,3,3-Tetrafluorpropen und mindestens eine Verbindung, ausgewählt aus der Gruppe bestehend aus CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, und mindestens eine Gaskomponente, wobei die Gaskomponente aus der Gruppe bestehend aus O₂, N₂, Ar, CO₂, CH₄, He und N₂/O₂-Mischungen, die ein Verhältnis von N₂/O₂ größer als oder gleich 78/21 aufweisen, ausgewählt ist.

2. Zusammensetzung nach Anspruch 1, weiter umfassend ein oder mehrere Oligomere, die eine Wiederholungseinheit aufweisen von
-{[CF(CF₃)CH₂]ₓ(Oₙ)}_{y}[CF(CF₃)CH₂]_{z}-,
wobei x, y ≥ 1, n = 0, 1 oder 2 und z ≥ 0.

3. Zusammensetzung nach Anspruch 1 oder 2, weiter umfassend mindestens ein Element, ausgewählt aus der Gruppe bestehend aus 1243zf, 1140, 1234ze, Trifluorpropin, 225ca, 225cb, 227ea und 152a.

4. Zusammensetzung nach einem der Ansprüche 1 bis 3, weiter umfassend mindestens ein Element, ausgewählt aus der Gruppe bestehend aus 1234ze, 1243zf, Z-1336mzz, E-1336mzz, 1327mz, 1122, 1122a, 1123, 1233zd, 1224yd, E-1132, Z-1132, 1132a, 1112, E-1225ye, Z-1225ye, 1234zc, 1234ye, 1234yc, 1225zc und 152a.

5. Zusammensetzung nach einem der Ansprüche 1 bis 4, weiter umfassend ein Schmiermittel.

6. Zusammensetzung eines der Ansprüche 1 bis 5, weiter umfassend Wasser.

7. Zusammensetzung nach einem der Ansprüche 1 bis 6, weiter umfassend einen Inhibitor, ausgewählt aus der Gruppe bestehend aus d-Limonen, l-Limonen, α-Pinen, β-Pinen, α-Terpinen, β-Terpinen, γ-Terpinen und δ-Terpinen und Mischungen aus zwei oder mehr davon, wobei der Inhibitor vorzugsweise mindestens eines von d-Limonen und α-Terpinen umfasst.

8. Zusammensetzung nach Anspruch 7, wobei der Inhibitor in einer Menge von etwa 30 bis etwa 3.000 ppm vorhanden ist.

9. Verfahren zum Erwärmen oder Kühlen unter Verwendung der Zusammensetzung nach einem der Ansprüche 1 bis 8.

10. Behälter, der die Kältemittelzusammensetzung nach einem der Ansprüche 1 bis 8 umfasst.

11. Verwendung einer Zusammensetzung nach einem der Ansprüche 1 bis 8 als ein Wärmeträgerfluid.

12. Verwendung einer Zusammensetzung nach einem der Ansprüche 1 bis 8 als ein Kältemittel in einem Kreislauf, wobei das Fluid einen Phasenübergang von einer Flüssigkeit zu einem Gas und zurück oder umgekehrt durchläuft.

13. Verwendung einer Zusammensetzung nach einem der Ansprüche 1 bis 8 als ein Kältemittel in einem Kreislauf, wobei das Fluid einen Phasenübergang von einer Flüssigkeit zu einem Gas und zurück oder umgekehrt in Klimaanlagen, Gefrierschränken, Kühlschränken, Wärmepumpen, Wasserkühlern, Kühlern mit überflutetem Verdampfer, Direktexpansionskühlern, Zentrifugalkühlern, Kühlzellen, mobilen Kühlschränken, mobilen Klimaanlagen oder Wärmepumpeneinheiten und Kombinationen davon durchläuft.

14. Verfahren zur Wärmeübertragung, wobei ein Arbeitsfluid verwendet wird, um Wärme von einer Wärmequelle zu einer Wärmesenke zu transportieren, **dadurch gekennzeichnet, dass** das Arbeitsfluid eine Zusammensetzung nach einem der Ansprüche 1 bis 8 umfasst.

15. Verfahren nach Anspruch 14, wobei das Arbeitsfluid ein Kältemittel ist, das einen Phasenübergang von einer Flüssigkeit zu einem Gas und zurück oder umgekehrt durchläuft.

## Revendications

1. Composition comprenant du 2,3,3,3-tétrafluoropropène, et au moins un composé choisi parmi le groupe consistant en CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, et au moins un composant gazeux, dans laquelle le composant gazeux est choisi parmi le groupe consistant en O₂, N₂, Ar, CO₂, CH₄, He et des mélanges N₂/O₂ présentant un rapport de N₂/O₂ supérieur ou égal à 78/21.

2. Composition selon la revendication 1, comprenant en outre un ou plusieurs oligomères présentant une unité répétitive de
-{[CF(CF₃)CH₂]ₓ(Oₙ)}_{y}[CF(CF₃)CH₂]_{z}-,
où x, y ≥ 1, n = 0, 1 ou 2, et z ≥ 0.

3. Composition selon la revendication 1 ou 2 comprenant en outre au moins un élément choisi parmi le groupe consistant en 1243zf, 1140, 1234ze, trifluoropropyne, 225ca, 225cb, 227ea et 152a.

4. Composition selon l'une quelconque des revendications 1 à 3 comprenant en outre au moins un élément choisi parmi le groupe consistant en 1234ze, 1243zf, Z-1336mzz, E-1336mzz, 1327mz, 1122, 1122a, 1123, 1233zd, 1224yd, E-1132, Z-1132, 1132a, 1112, E-1225ye, Z-1225ye, 1234zc, 1234ye, 1234yc, 1225zc et 152a.

5. Composition selon l'une quelconque des revendications 1 à 4 comprenant en outre un lubrifiant.

6. Composition selon l'une quelconque des revendications 1 à 5 comprenant en outre de l'eau.

7. Composition selon l'une quelconque des revendications 1 à 6 comprenant en outre un inhibiteur choisi parmi le groupe consistant en le d-limonène, le l-limonène, l'α-pinène, le β-pinène, l'α-terpinène, le β-terpinène, le γ-terpinène et le δ-terpinène, et des mélanges de deux ou plusieurs de ceux-ci, de préférence dans lequel l'inhibiteur comprend au moins l'un parmi le d-limonène et l'α-terpinène.

8. Composition selon la revendication 7 dans laquelle l'inhibiteur est présent en une quantité d'environ 30 à environ 3 000 ppm.

9. Procédé de chauffage ou de refroidissement utilisant la composition selon l'une quelconque des revendications 1 à 8.

10. Récipient comprenant la composition réfrigérante selon l'une quelconque des revendications 1 à 8.

11. Utilisation d'une composition selon l'une quelconque des revendications 1 à 8 comme fluide caloporteur.

12. Utilisation d'une composition selon l'une quelconque des revendications 1 à 8 comme réfrigérant dans un cycle dans lequel le fluide subit un changement de phase de l'état liquide à l'état gazeux et vice versa.

13. Utilisation d'une composition selon l'une des revendications 1 à 8 comme réfrigérant dans un cycle dans lequel le fluide subit un changement de phase de l'état liquide à l'état gazeux et vice versa dans les climatiseurs, congélateurs, réfrigérateurs, pompes à chaleur, refroidisseurs d'eau, refroidisseurs à évaporateur noyé, refroidisseurs à détente directe, refroidisseurs centrifuges, chambres froides, réfrigérateurs mobiles, unités mobiles de climatisation ou de pompe à chaleur et combinaisons de ceux-ci.

14. Procédé de transfert de chaleur dans lequel un fluide de travail est utilisé pour transporter la chaleur d'une source de chaleur vers un dissipateur thermique, **caractérisé par** ledit fluide de travail comprenant une composition selon l'une quelconque des revendications 1 à 8.

15. Procédé selon la revendication 14, dans lequel le fluide de travail est un réfrigérant qui subit un changement de phase de l'état liquide à l'état gazeux et vice versa.
